# EUROPÄISCHE PATENTSCHRIFT

(11) **EP 3 565 773 B1**
(45) Veröffentlichungstag und Bekanntmachung des Hinweises auf die Patenterteilung: **08.04.2020**
(21) Anmeldenummer: 18714673.3
(22) Anmeldetag: 26.02.2018
(51) Int. Cl.: B65G 19/24

(54) **KLAPPBARER KETTENKRATZER**
HINGED SCRAPER CHAIN
RACLETTE DE CONVOYEUR À CHAÎNE REPLIABLE

(30) Priorität: 03.03.2017 DE 102017104500
(43) Veröffentlichungstag der Anmeldung: 13.11.2019
(73) Patentinhaber: Thiele GmbH & Co. KG, 58640 Iserlohn (DE)
(72) Erfinder: ZELESNIK, Tim, 58642 Iserlohn (DE)
(74) Vertreter: Osterhoff, Utz
(86) Internationale Anmeldenummer: PCT/DE2018/100165
(87) Internationale Veröffentlichungsnummer: WO 2018/157886

(56) Entgegenhaltungen:
- WO-A1-2004/065270
- DE-A1- 2 943 719
- DE-A1- 3 907 639
- DE-A1- 10 147 846
- US-A- 1 658 250

## Beschreibung

Die vorliegende Erfindung betrifft einen Kettenkratzer zur Anordnung in einem Kratzerförderer gemäß den Merkmalen im Oberbegriff von Anspruch 1.

Aus dem Stand der Technik sind Kratzerförderer bekannt. Hier läuft in einer Wanne ein Kettenstrang, an welchem in aufeinander folgenden Abständen Kettenkratzer angeordnet sind. Diese Kettenkratzer bewegen an ihrer Förderseite ein entsprechendes zu beförderndes Gut in Förderrichtung.

Da die Kettenkratzer relativ beweglich in der Wanne, jedoch relativ zur Kette fest angeordnet sind, ist zumeist ein Glied der Kette in dem Kettenkratzer formschlüssig aufgenommen.

Ein gattungsbildender Kettenkratzer ist aus der DE 37 05 914 A1 bekannt. Dieser weist einen Kratzerkörper auf, welcher in Einbausituation untenliegend angeordnet ist. Ein entsprechendes Sicherungsstück kann dann auf dem Kratzerkörper angeordnet werden und mittels Spannstiften lagefixiert werden. Ferner offenbaren DE 101 47 846 A1 sowie WO 2004/065270 A1 Kettenkratzer gemäß dem Oberbegriff des Anspruchs 1.

Aufgabe der vorliegenden Erfindung ist es, einen Kettenkratzer weiterzubilden, dergestalt, dass dieser bei Montage bzw. Demontage einfacher handhabbar ist.

Die zuvor genannte Aufgabe wird mit einem Kettenkratzer zur Anordnung in einem Kratzerförderer mit den Merkmalen im Anspruch 1 gelöst.

Vorteilhafte Ausgestaltungsvarianten sind Gegenstand der abhängigen Ansprüche. Der Kettenkratzer ist zur Anordnung in einem Kratzerförderer geeignet. Der Kettenkratzer erstreckt sich dabei quer zur Kettenrichtung und weist einen Kratzerkörper und einen Sicherungskörper auf. Der Kratzerkörper und der Sicherungskörper sind im verriegelten Zustand formschlüssig unter Eingliederung der Kette miteinander im Eingriff. Weiterhin sind die formschlüssig miteinander im Eingriff stehenden Kratzerkörper und Sicherungskörper unter Eingliederung von mindestens zwei Bolzen gesichert bzw. miteinander gekoppelt.

Erfindungsgemäß zeichnet sich der Kettenkratzer nunmehr dadurch aus, dass der Sicherungskörper zur Ausführung einer Öffnungsbewegung bzw. Schließbewegung relativ schwenkbar an dem Kratzerkörper gelagert ist.

Der erfindungswesentliche Vorteil besteht darin, dass der Kratzerkörper in die Wanne bzw. den Trum eingelegt werden kann und dann die Kette von oben auf dem Kratzerkörper abgelegt werden kann. Der Sicherungskörper muss nicht als externes Bauteil bevorratet werden und/oder dem Kettenkratzer zugeführt werden. Der Sicherungskörper ist bereits schwenkbar an dem Kratzerkörper angeordnet. Zur formschlüssigen Verriegelung kann der Sicherungskörper dann eine Schwenkbewegung ausführen und auf dem Kratzerkörper im Anschluss daran abgelegt werden, dergestalt, dass ein dazwischen befindliches Kettenglied formschlüssig eingeschlossen wird und der Kratzerkörper sowie der Sicherungskörper formschlüssig ineinandergreifen. Zur Lagesicherung werden dann mindestens zwei, bevorzugt drei Bolzen, insbesondere in Form von Steckbolzen eingeführt.

Der Kratzerkörper und der Sicherungskörper sind somit im unmontierten Zustand bereits miteinander gekoppelt, so dass nicht zwei separate Bauteile zum jeweiligen Montageort zugeführt werden müssen. Vielmehr können die zwei Bauteile als eine Einheit am Montageort positioniert werden, dann die Kette darauf abgelegt werden und anschließend eine Schließbewegung durch Schwenken des Sicherungskörpers ausgeführt werden. Insbesondere können die Bewegungen einhändig ausgeführt werden, so dass ein anwendender Monteur mit einer Hand den Kettenkratzer in der Wanne ablegt und mit der anderen Hand die Kette in dem Kettenkratzer positionieren und halten kann. Wiederum kann mit der anderen Hand dann die Schließbewegung durch Schwenken des Sicherungskörpers ausgeführt werden.

Der Kettenkratzer ist insbesondere derart ausgebildet, dass er zwei parallel nebeneinander verlaufende Ketten aufnimmt. Der Kettenkratzer kann jedoch auch nur eine Kette aufnehmen.

Insbesondere bei einem Kettenkratzer, der zwei parallel nebeneinander beabstandete Ketten aufnimmt, ist im mittigen Bereich ein Steg ausgebildet. Der Steg ist bevorzugt an dem Kratzerkörper ausgebildet und steht gegenüber dem Kratzerkörper in Einbaulage nach oben über. Bevorzugt greift der Steg in einen Schlitz des Sicherungskörpers ein, sofern der Sicherungskörper auf den Kratzerkörper geschwenkt ist.

Weiterhin besonders bevorzugt erstreckt sich der Steg quer zur Kettenrichtung. Insbesondere wird bei geschlossenem ineinander gesetzten Kettenkratzer ein Bolzen den Sicherungskörper und den Steg durchgreifend eingesetzt.

Ein weiterer Vorteil der Erfindung ist, dass Steckbolzen verwendet werden können. Die Steckbolzen weisen bevorzugt einen Bolzenkopf auf. Der Bolzenkopf ist insbesondere gegenüber einem Schaft des Bolzens vergrößert ausgebildet. Die Bolzen, insbesondere in Form von Steckbolzen, werden bevorzugt parallel zur Kettenrichtung in den Kettenkratzer eingesteckt. Der Bolzenkopf zeigt dabei insbesondere in Förderrichtung des Kettenkratzers nach vorne. Dies bietet den Vorteil, dass in den Kettenkratzer eingesteckte Bolzen bei Betrieb des Kratzerförderers nicht durch das zu fördernde Gut aus dem Kettenkratzer herausgedrückt werden. Im Gegenteil, das zu fördernde Gut liegt dann am Bolzenkopf an und drückt diesen in Richtung des Kettenkratzers bzw. der Aufnahme des Bolzens. Es erfolgt somit eine Eigensicherung des Bolzens.

Bevorzugt ist für die Aufnahme des Bolzenkopfes eine Vertiefung an dem Kratzerkörper bzw. dem Sicherungskörper ausgebildet. Der Bolzenkopf ist dabei in der Vertiefung aufgenommen, dergestalt, dass eine Vorderseite des Kettenkratzers im Bereich des Bolzenkopfes plan bzw. eben ausgebildet ist. An der Vorderseite zur Anlage kommendes Gut verkantet somit hier nicht, sondern kann parallel zur Vorderseite abgleiten.

Insbesondere sind die Bolzen als Einsteckbolzen ausgebildet. Weiterhin bevorzugt sind diese mit einem Sicherungsring, insbesondere Sprengring, gesichert. Dies bietet den Vorteil, dass kein zusätzliches Werkzeug benötigt wird. Der Kettenkratzer kann in die Wanne eingesetzt werden, der Sicherungskörper durch Schwenken mit dem Kratzerkörper gekoppelt werden und dann können die Bolzen eingesetzt werden, ohne dass weiteres Werkzeug, insbesondere Spezialwerkzeug benötigt wird. Zur Demontage können die Bolzen einfach entgegengesetzt der Einsetzrichtung ausgeschlagen werden.

Alternativ oder ergänzend können die Bolzen auch durch quer zum Bolzen eingesetzte Spannstifte gesichert werden. Auch können die Bolzen in Form von Schrauben verwendet werden.

Weiterhin ist vorgesehen, dass die Schwenkbewegung des Sicherungskörpers relativ zu dem Kratzerkörper mechanisch begrenzt ist. Insbesondere kann in der Offenstellung ein Überschwenken dadurch vermieden werden. Besonders bevorzugt ist der Sicherungskörper im geöffneten Zustand in einem Winkel zum Kratzerkörper angeordnet. Dieser Winkel beträgt bevorzugt zwischen 90 und 140, insbesondere 100 bis 135, ganz besonders bevorzugt 100 bis 130 und insbesondere 110 bis 130 Grad.

Das bietet den Vorteil, dass aufgrund eines Winkels größer 90 Grad ein versehentliches Zurückklappen des Sicherungskörpers aufgrund seines Eigengewichtes vermieden wird. Gleichzeitig kann die Kette von oben in den Kratzerkörper eingesetzt werden, ohne dass der Sicherungskörper hierzu im Wege steht.

Damit ein versehentliches Einklappen des Sicherungskörpers in den Kratzerkörper weiterhin auch während des Einsetzens des Kettenkratzers in die Wanne vermieden wird, ist weiterhin vorgesehen, dass der Sicherungskörper in Offenstellung relativ zu dem Kratzerkörper lagefixiert ist. Dies erfolgt bevorzugt dergestalt, dass ein Sicherungsstift zwischen Sicherungskörper und Kratzerkörper eingesetzt ist, welcher den Sicherungskörper im geöffneten Zustand in Relation zu dem Kratzerkörper lagefixiert hält.

Weiterhin bevorzugt ist der Kratzerkörper derart ausgebildet, dass er größer ist als der Sicherungskörper, insbesondere bildet der Kratzerkörper mehr als 50 %, bevorzugt mehr als 60 % und insbesondere mehr als 65 % des Kettenkratzers aus. Der Sicherungskörper ist in Relation zu dem Kratzerkörper kleiner ausgebildet. Bevorzugt entspricht eine Länge des Sicherungskörpers 50 bis 90 %, insbesondere 50 bis 80 %, besonders bevorzugt 50 bis 70% der Länge des Kratzerkörpers.

Der Kratzerkörper weist weiterhin oberseitig bevorzugt jeweils eine Aufnahmemulde auf. Diese kann auch Mulde genannt werden. In der geschlossenen Stellung kommt weiterhin ein jeweiliges Ende des Sicherungskörpers in der Aufnahmemulde zur Anlage. Ein jeweiliger Bolzen wird dann die Außenseiten der Aufnahmemulde und das Ende des Sicherungskörpers durchgreifend eingesetzt.

Die Schwenkbewegung des Sicherungskörpers ist insbesondere in der Offenstellung durch die Aufnahmemulde mechanisch begrenzt. Hierzu kommt insbesondere eine Oberseite bzw. Außenseite des Sicherungskörpers mit der Aufnahmemulde formschlüssig zur Anlage.

Weiterhin bevorzugt ist ein Horizontalglied der Kette in dem geschlossenen Kettenkratzer formschlüssig aufgenommen. Das in die jeweilige Kettenrichtung auf das Horizontalglied folgende Vertikalglied liegt bevorzugt an einer Vorderseite bzw. Rückseite des Kettenkratzers an. Hierzu ist insbesondere eine Anlagefläche ausgebildet, die der Kontur der Außenrundung des Vertikalgliedes korrespondiert. Sofern die Kette in Förderrichtung bewegt wird, liegt die Außenrundung formschlüssig in der Anlagefläche an, so dass die von dem Vertikalglied an den Kratzerkörper übertragene Flächenpressung großflächig verteilt wird. Der mechanische Abrieb in diesem Bereich wird dadurch minimiert und die Belastbarkeit des Kettenkratzers erhöht.

Der Kettenkratzer selbst ist insbesondere aus metallischem Werkstoff ausgebildet, besonders bevorzugt als Schmiedeteil oder Gußteil. Optional ergänzend können die Kratzerspitzen gehärtet sein.

Weitere Vorteile, Merkmale, Eigenschaften und Aspekte der vorliegenden Erfindung sind Gegenstand der nachfolgenden Beschreibung. Bevorzugte Ausgestaltungsvarianten werden in den schematischen Figuren dargestellt. Diese dienen dem einfachen Verständnis der Erfindung. Es zeigen:
- Figur 1: einen erfindungsgemäßen Kettenkratzer in perspektivischer Ansicht,
- Figur 2: einen erfindungsgemäßen Kettenkratzer in Frontansicht,
- Figur 3: einen erfindungsgemäßen Kettenkratzer in Draufsicht,
- Figur 4: den geöffneten Kettenkratzer in perspektivischer Ansicht,
- Figur 5: den geöffneten Kettenkratzer in Frontansicht,
- Figur 6: den geöffneten Kettenkratzer in Draufsicht,
- Figur 7: den Kettenkratzer während der Ausführung einer Schließbewegung,
- Figur 8: eine Schnittansicht gemäß der Schnittlinie A-A aus Figur 2,
- Figur 9: eine alternative Schnittansicht gemäß Figur 8,
- Figur 10: eine alternative Schnittansicht zu Figur 8,
- Figur 11: eine alternative Schnittansicht zu Figur 8 und
- Figur 12: eine alternative Schnittansicht zu Figur 8.

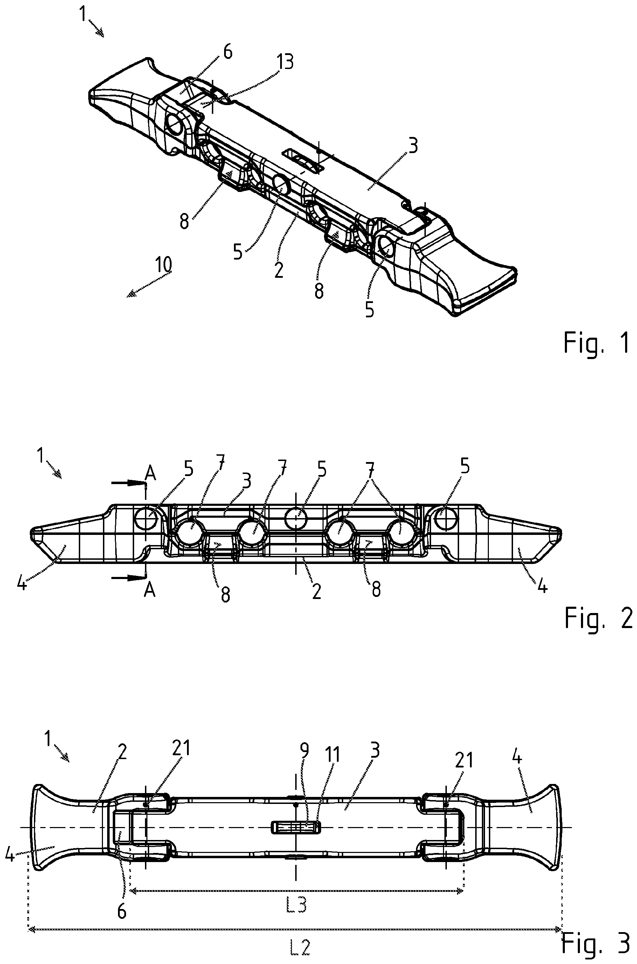

Die Figuren 1, 2 und 3 zeigen den erfindungsgemäßen Kettenkratzer 1 in geschlossener Stellung in perspektivischer Ansicht, Frontansicht sowie Draufsicht. Der Kettenkratzer 1 weist einen, auf die Einbaulage bezogen, unteren Kratzerkörper 2 sowie einen auf dem Kratzerkörper 2 angeordneten Sicherungskörper 3 auf. Der Kratzerkörper 2 weist seitlich von diesem abstehende Kratzerspitzen 4 auf, die beliebig in ihrer Geometrie, Form und Außenkontur an eine jeweilige Förderrinne bzw. Förderwanne angepasst werden können.

Der Kratzerkörper 2 ist bevorzugt einstückig und werkstoffeinheitlich ausgebildet, genauso wie der Sicherungskörper 3. Der Sicherungskörper 3 ist insbesondere kleiner ausgebildet als der Kratzerkörper 2. Der Kratzerkörper 2 ist auf die Einbausituation bezogen untenliegend angeordnet, wobei der Sicherungskörper 3 darauf angeordnet ist. Erfindungsgemäß sind Kratzerkörper 2 und Sicherungskörper 3 formschlüssig ineinandergreifend und über Bolzen 5 lagefixiert. Weiterhin ist die Länge L2 des Kratzerkörpers 2 und die Länge L3 des Sicherungskörpers 3 eingezeichnet. Der Sicherungskörper 3 ist kürzer als der Kratzerkörper 2.

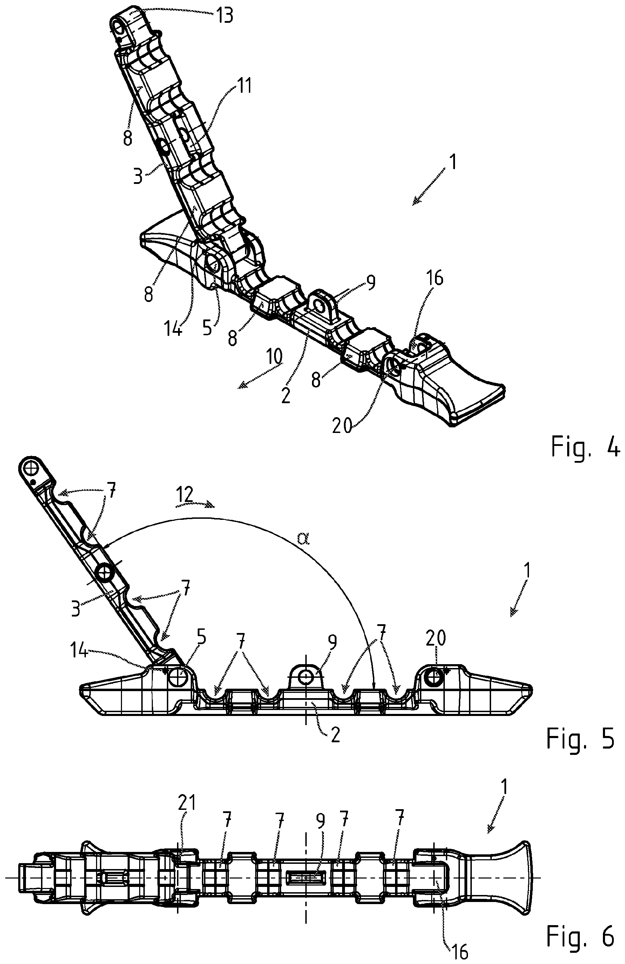

Der erfindungswesentliche Vorteil ist dargestellt in den Figuren 4, 5 und 6. Der Sicherungskörper 3 ist gegenüber dem Kratzerkörper 2 schwenkbar gelagert. Insbesondere beträgt ein Winkel α in einer Offenstellung zwischen 90 und 140 Grad, insbesondere zwischen 100 und 130 Grad. Ein Bolzen 5, dargestellt in der linken Bildseite ist zugleich als Schwenkbolzen ausgebildet, so dass der Kratzerkörper 2 unverlierbar mit dem Sicherungskörper 3 auch im demontierten Zustand verbunden ist.

Der in den Figuren 1 bis 6 dargestellte Kettenkratzer 1 ist für zwei parallel nebeneinander verlaufende Ketten ausgelegt. Hierzu sind jeweils Aufnahmeöffnungen 7 zur Aufnahme eines liegenden Kettengliedes bzw. Horizontalgliedes einer Kette vorgesehen. Die Aufnahmeöffnungen 7 sind in der hier dargestellten Ausführungsvariante jeweils zur Hälfte im Kratzerkörper 2 sowie zur anderen Hälfte im Sicherungskörper 3 ausgebildet. Für ein auf das Horizontalglied folgendes Vertikalglied ist jeweils eine Anlagefläche 8 vorgesehen, mit welcher eine nicht näher dargestellte Außenrundung des Vertikalgliedes formschlüssig zur Anlage kommt und somit den Kettenkratzer 1 in Bewegung setzt.

Ferner ist mittig ein Steg 9 vorgesehen, welcher gegenüber dem Kratzerkörper 2 übersteht sowie quer zur Kettenrichtung 10 - welche auch gleichsam die Förderrichtung 10 ist - orientiert ausgebildet ist. Dieser greift in einen Schlitz 11 des Sicherungskörpers 3 ein und ist dann gemäß Figur 1 von einem Bolzen 5 durchgriffen.

Insbesondere sind bei der hier dargestellten Ausgestaltungsvariante drei Bolzen 5 eingesetzt. Der auf der Bildebene jeweils linke Bolzen 5 dient gleichzeitig als Schwenk- bzw. Drehbolzen, die anderen beiden Bolzen 5 werden im geschlossenen Zustand als Sicherungsbolzen eingesetzt.

Somit kann der gemäß Figur 5 dargestellte Sicherungskörper 3 in einer Schwenkrichtung 12 in den in Figur 2 dargestellten geschlossenen Zustand überführt werden. Zunächst kann jedoch gemäß Figur 5 die jeweilige Kette in den Kratzerkörper eingelegt werden.

Damit nunmehr die Schwenkbewegung beim Öffnen mechanisch begrenzt ist, ist gemäß Figur 1 eine Mulde 6 vorgesehen, in welcher ein jeweiliges Ende 13 des Sicherungskörpers 3 formschlüssig eingreift, wobei im geöffneten Zustand die Außenfläche des Endes 13 formschlüssig an der Mulde 6 zur Anlage kommt und somit ein weiteres Öffnen bzw. Überschwenken verhindert.

Ferner kann ein Sicherungsstift 14 gemäß Figur 4 und 5 eingesetzt sein, wobei der Sicherungsstift 14 den Sicherungskörper 3 im geöffneten Zustand relativ zu dem Kratzerkörper 2 lagefixiert hält. Vor Ausführen einer Schließbewegung kann der Sicherungsstift 14 zunächst entfernt werden. Ein versehentliches Abklappen bzw. Zufallen des schwenkbaren Sicherungskörpers 3 wird hierdurch vermieden.

Bevorzugt ist der Kratzerkörper 3, wie in Figur 1 dargestellt, nur auf einer Seite mit der Mulde 6 versehen. Der Kratzerkörper 2 kann jedoch auch spiegelsymmetrisch ausgebildet sein, so dass die Mulde 6 auf jeder Seite ausgebildet wäre.

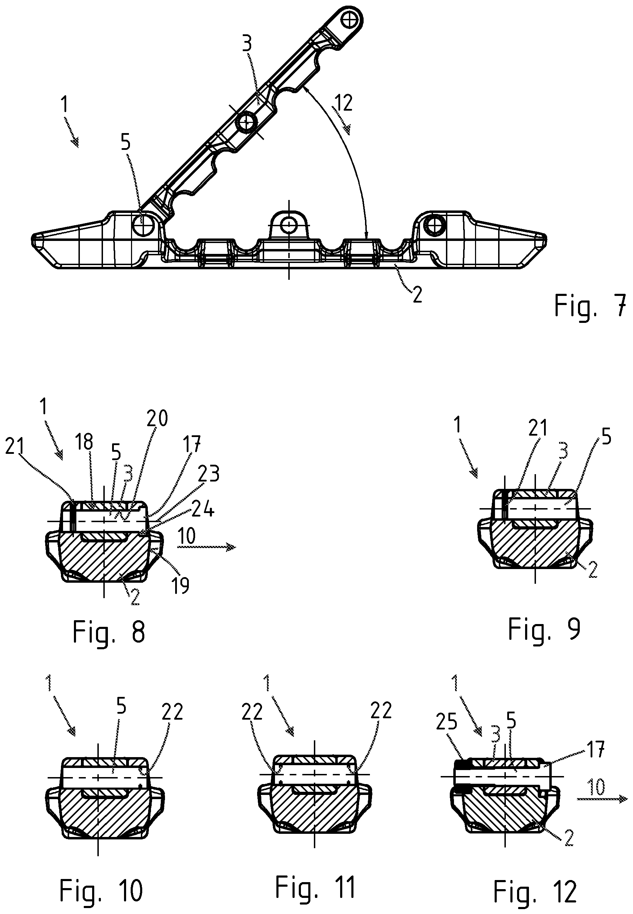

Figur 7 zeigt den Kettenkratzer 1 während Ausführung der Schließbewegung in Schwenkrichtung 12. Der Sicherungskörper 3 wird somit um den Bolzen 5 als Schwenkbolzen geschwenkt und kommt formschlüssig auf dem Kratzerkörper 2 zur Anlage. Im Anschluss werden die zwei weiteren Bolzen 5 eingesetzt, so dass das gegenüberliegende Ende 13 des Sicherungskörpers 3 in eine Aufnahmemulde 16 (dargestellt in Figur 4) des Kratzerkörpers 2 formschlüssig eingreift sowie der Steg 9 in den Schlitz 11 eingreift.

Die Bolzen 5 sind ferner dargestellt in den Figuren 8 ff., welche verschiedene Ausgestaltungsvarianten von Schnittdarstellungen gemäß der Schnittlinie A-A aus Figur 2 sind. Ein Bolzenkopf 17 ist in dieser Ausgestaltungsvariante größer ausgebildet, als ein Bolzenschaft 18. Der Bolzen 5 erstreckt sich mit seiner Mittellängsachse 23 zu einer Parallelen der Kettenrichtung 10. Der Bolzenkopf 17 ist in Bezug auf die Förderrichtung 10 nach vorn orientiert angeordnet. Bevorzugt ist der Bolzenkopf 17 in einer Vertiefung 24 versenkt angeordnet. Eine Vorderseite 19 des Kettenkratzers 1 kann somit im Wesentlichen plan bzw. eben ausgebildet sein. An der Vorderseite 19 anliegendes Gut drückt den Bolzen 5 in Richtung der Aufnahmeöffnung 20, so dass dieser nicht von alleine unvorhergesehen durch das zu befördernde Gut aus der Aufnahmeöffnung 20 herausgedrückt wird. Ferner ist optional ein Spannstift 21 angeordnet, welcher ebenfalls den Bolzen 5 in seiner Einbaulage hält.

Figur 9 zeigt eine dazu alternative Ausgestaltungsvariante gemäß Figur 8. Der Bolzen 5 ist hier durchgehend als Bolzenschaft 18 ausgebildet und nur über einen Spannstift 21 gesichert.

Figur 10 zeigt eine wiederum alternative Ausgestaltungsvariante. Hier ist ein Sprengring 22 vorgesehen, welcher den Bolzen 5 in Einbauposition in dem Kettenkratzer 1 hält.

Figur 11 zeigt eine dazu alternative Ausgestaltungsvariante mit zwei Sprengringen 22.

Figur 12 zeigt eine wiederum alternative Ausgestaltungsvariante. Hierbei ist der Bolzen 5 als Schraubbolzen ausgebildet und weist ebenfalls einen Bolzenkopf 17 auf. Auf der gegenüberliegenden Seite ist dieser durch eine Mutter 25 gesichert. In einer besonders bevorzugten Ausgestaltungsvariante ist der Bolzenkopf 17 ebenfalls versenkt gelagert. Besonders bevorzugt ist der Bolzenkopf 17 als Schraubenkopf gegen Verdrehen gesichert. Dies kann beispielsweise derart ausgebildet sein, dass mindestens eine Ansatzfläche für einen Schlüssel formschlüssig an einer Nut oder Kante des Kratzerkörpers 2 und/oder Sicherungskörpers 3 anliegt und somit der Bolzen 5 gegen Verdrehen gesichert ist.

### Bezugszeichen:

- 1 -: Kettenkratzer
- 2 -: Kratzerkörper
- 3 -: Sicherungskörper
- 4 -: Kratzerspitze
- 5 -: Bolzen
- 6 -: Mulde
- 7 -: Aufnahmeöffnung
- 8 -: Anlagefläche
- 9 -: Steg
- 10 -: Kettenrichtung/Förderrichtung
- 11 -: Schlitz
- 12 -: Schwenkrichtung
- 13 -: Ende zu 3
- 14 -: Sicherungsstift
- 16 -: Aufnahmemulde
- 17 -: Bolzenkopf
- 18 -: Bolzenschaft
- 19 -: Vorderseite
- 20 -: Aufnahmeöffnung
- 21 -: Spannstift
- 22 -: Sprengring
- 23 -: Mittellängsachse
- 24 -: Vertiefung
- 25 -: Mutter

- α -: Winkel
- L2 -: Länge zu 2
- L3 -: Länge zu 3

## Patentansprüche

1. Kettenkratzer (1) zur Anordnung in einem Kratzerförderer, wobei sich der Kettenkratzer (1) quer zu einer Kettenrichtung (10) erstreckt und einen Kratzerkörper (2) und einen Sicherungskörper (3) aufweist, wobei Kratzerkörper (2) und Sicherungskörper (3) im verriegelten Zustand formschlüssig unter Eingliederung der Kette miteinander im Eingriff stehen und der Kratzerkörper (2) und der Sicherungskörper (3) unter Eingliederung von mindestens zwei Bolzen (5) miteinander gekoppelt sind, **dadurch gekennzeichnet, dass** der Sicherungskörper (3) zur Ausführung einer Öffnungsbewegung bzw. Schließbewegung relativ schwenkbar an dem Kratzerkörper (2) gelagert ist.

2. Kettenkratzer (1) nach Anspruch 1, **dadurch gekennzeichnet, dass** der Kratzerkörper (2) in Relation zu dem Sicherungskörper (3) größer ausgebildet ist und/oder dass bezogen auf eine Einbausituation der Kratzerkörper (2) untenliegend angeordnet ist, dergestalt, dass der Sicherungskörper (3) zum Ausführen einer Schließbewegung nach unten schwenkbar ist.

3. Kettenkratzer (1) nach Anspruch 1 oder 2, **dadurch gekennzeichnet, dass** der Kettenkratzer (1) zur Aufnahme zweier parallel nebeneinander verlaufender Ketten ausgebildet ist und/oder in einem mittigen Bereich ein Steg (9) gegenüber dem Kratzerkörper (2) übersteht und formschlüssig in den Sicherungskörper (3) eingreift, wobei sich der Steg (9) bevorzugt quer zur Kettenrichtung (10) erstreckt.

4. Kettenkratzer (1) nach Anspruch 3, **dadurch gekennzeichnet, dass** ein dritter Bolzen (5) den Steg (9) und den Sicherungsköper (3) durchgreifend angeordnet ist.

5. Kettenkratzer (1) nach einem der Ansprüche 1 bis 4, **dadurch gekennzeichnet, dass** die Bolzen (5) einen Bolzenkopf (17) aufweisen, welcher gegenüber einem Bolzenschaft (18) des Bolzens (5) vergrößert ausgebildet ist.

6. Kettenkratzer (1) nach Anspruch 5, **dadurch gekennzeichnet, dass** die Bolzen (5) entgegen der Förderrichtung (10) in den Kettenkratzer (1) eingesteckt werden, dergestalt, dass der Bolzenkopf (17) parallel zur Kettenrichtung (10) nach vorn orientiert ist.

7. Kettenkratzer (1) nach einem der Ansprüche 5 oder 6, **dadurch gekennzeichnet, dass** der Bolzenkopf (17) in einer Vertiefung (24) des Kratzerkörpers (2) gelagert ist, dergestalt, dass eine Vorderseite (19) des Kettenkratzers (1) eben bzw. plan ist und/oder dass der Bolzenkopf (17) gegen Verdrehen gesichert ist.

8. Kettenkratzer (1) nach einem der Ansprüche 1 bis 7, **dadurch gekennzeichnet, dass** der Sicherungskörper (3) in einem Winkel (a) zu dem Kratzerkörper (2) schwenkbar ist, wobei ein Öffnungswinkel (a) von 90 bis 140 Grad, insbesondere von 100 bis 135 Grad und besonders bevorzugt von 110 bis 130 Grad beträgt.

9. Kettenkratzer (1) nach einem der Ansprüche 1 bis 8, **dadurch gekennzeichnet, dass** der Kratzerkörper (2) eine Mulde (6) aufweist, in welche ein Ende (13) des Sicherungskörpers (3) formschlüssig eingreift, wobei ein Bolzen (5) die Außenseiten der Mulde (6) und das Ende (13) des Sicherungskörpers (3) durchgreifend angeordnet ist, wobei der Bolzen (5) eine Schwenkachse bildet.

10. Kettenkratzer (1) nach Anspruch 9, **dadurch gekennzeichnet, dass** die Schwenkbewegung des Sicherungskörpers (3) mechanisch durch die Mulde (6) begrenzt ist

11. Kettenkratzer (1) nach einem der Ansprüche 1 bis 10, **dadurch gekennzeichnet, dass** in dem Kratzerförderer ein Horizontalglied der Kette aufgenommen ist, wobei ein jeweils auf das Horizontalglied folgendes Vertikalglied mit seiner Außenrundung an einer Anlagefläche (8) zur Anlage kommt, wobei die Anlagefläche (8) bevorzugt zweigeteilt ausgebildet ist, und ein Teil der Anlagefläche (8) durch den Kratzerkörper (2) gebildet ist und der zweite Teil durch den Sicherungskörper (3).

12. Kettenkratzer (1) nach einem der Anbsprüche 1 bis 11, **dadurch gekennzeichnet, dass** die Bolzen (5) jeweils durch mindestens einen Spannstift (21) und/oder durch einen Sprengring (22) und/oder durch eine Verschraubung gesichert sind.

13. Kettenkratzer (1) nach einem der Ansprüche 1 bis 12, **dadurch gekennzeichnet, dass** der Kettenkratzer (1) den Kratzerkörper (2) und den Sicherungskörper (3) durchgreifende Ausnehmungen aufweist, dergestalt, dass im geschlossenen Zustand ein Bolzen (5) eingesetzt ist.

## Claims

1. Chain scraper (1) for arrangement in a scraper conveyor, the chain scraper (1) extending transversely to a chain direction (10) and having a scraper body (2) and a securing body (3), wherein in the locked state with the chain incorporated scraper body (2) and securing body (3) engage one another in a form-fitting manner and the scraper body (2) and the securing body (3) are coupled to one another with the incorporation of at least two bolts (5), **characterised in that** the securing body (3) is, for carrying out an opening movement or closing movement, mounted in a relatively pivotable manner on the scraper body (2).

2. Chain scraper (1) according to claim 1, **characterised in that** the scraper body (2) is of larger form relative to the securing body (3) and/or **in that** the scraper body (2) is arranged at the bottom, with reference to an installation situation, in such a way that the securing body (3) can be pivoted downwards to carry out a closing movement.

3. Chain scraper (1) according to claim 1 or 2, **characterised in that** the chain scraper (1) is configured to receive two chains running parallel and alongside each other and/or in a central region a web (9) projects from the scraper body (2) and engages in a form-fitting manner in the securing body (3), the web (9) preferably extending transversely to the chain direction (10).

4. Chain scraper (1) according to claim 3, **characterised in that** a third bolt (5) is arranged to pass through the web (9) and the securing body (3).

5. Chain scraper (1) according to any one of claims 1 to 4, **characterised in that** the bolts (5) have a bolt head (17) which is enlarged relative to a bolt shaft (18) of the bolt (5).

6. Chain scraper (1) according to claim 5, **characterised in that** the bolts (5) are inserted into the chain scraper (1) contrary to the conveying direction (10), in such a way that the bolt head (17) is oriented forwards, parallel to the chain direction (10).

7. Chain scraper (1) according to any one of claims 5 or 6, **characterised in that** the bolt head (17) is mounted in a depression (24) of the scraper body (2), in such a way that a front side (19) of the chain scraper (1) is flat or planar and/or that the bolt head (17) is secured against rotation.

8. Chain scraper (1) according to any one of claims 1 to 7, **characterised in that** the securing body (3) is pivotable at an angle (α) to the scraper body (2), wherein an opening angle (α) is from 90 to 140 degrees, in particular from 100 to 135 degrees and particularly preferably from 110 to 130 degrees.

9. Chain scraper (1) according to any one of claims 1 to 8, **characterised in that** the scraper body (2) has a recess (6) in which an end (13) of the securing body (3) engages in a form-fitting manner, a bolt (5) being arranged to pass through the outer sides of the recess (6) and the end (13) of the securing body (3), the bolt (5) forming a pivot axis.

10. Chain scraper (1) according to claim 9, **characterised in that** the pivoting movement of the securing body (3) is mechanically limited by the recess (6).

11. Chain scraper (1) according to any one of claims 1 to 10, **characterised in that** a horizontal link of the chain is accommodated in the scraper conveyor, a vertical link following each horizontal link coming to rest with its outer curvature on a contact surface (8), wherein the contact surface (8) is preferably formed in two parts, and one part of the contact surface (8) is formed by the scraper body (2) and the second part by the securing body (3).

12. Chain scraper (1) according to any one of claims 1 to 11, **characterised in that** the bolts (5) are each secured by at least one dowel pin (21) and/or by a snap ring (22) and/or by a screw connection.

13. Chain scraper (1) according to any one of claims 1 to 12, **characterised in that** the chain scraper (1) has openings passing through the scraper body (2) and the securing body (3) in such a way that in the closed state a bolt (5) is inserted.

## Revendications

1. Raclette (1) destinée à être disposée dans un convoyeur à raclettes, dans laquelle la raclette (1) s'étend transversalement à une direction de chaîne (10) et présente un corps de raclette (2) et un corps de blocage (3), dans laquelle le corps de raclette (2) et le corps de blocage (3), dans l'état verrouillé, sont en contact l'un avec l'autre par coopération de formes par intégration de la chaîne et le corps de raclette (2) et le corps de blocage (3) sont accouplés l'un à l'autre par intégration d'au moins deux axes (5), **caractérisée en ce que** le corps de blocage (3), pour la réalisation d'un mouvement d'ouverture ou mouvement de fermeture, est monté de manière relativement pivotante sur le corps de raclette (2).

2. Raclette (1) selon la revendication 1, **caractérisée en ce que** le corps de raclette (2) est réalisé de manière plus grande par rapport au corps de blocage (3) et/ou que, par rapport à une situation de montage, le corps de raclette (2) est disposé dessous, de telle sorte que le corps de blocage (3) peut pivoter vers le bas pour réaliser un mouvement de fermeture.

3. Raclette (1) selon la revendication 1 ou 2, **caractérisée en ce que** la raclette (1) est réalisée pour recevoir deux chaînes s'étendant parallèlement l'une à l'autre et/ou, dans une zone centrale, une entretoise (9) fait saillie par rapport au corps de raclette (2) et s'insère par coopération de formes dans le corps de blocage (3), dans laquelle la nervure (9) s'étend de préférence transversalement à la direction de chaine (10).

4. Raclette (1) selon la revendication 3, **caractérisée en ce qu'**un troisième axe (5) est disposé de manière à traverser l'entretoise (9) et le corps de blocage (3).

5. Raclette (1) selon l'une quelconque des revendications 1 à 4, **caractérisée en ce que** les axes (5) présentent une tête d'axe (17), laquelle est réalisée de manière agrandie par rapport à une tige d'axe (18) de l'axe (5).

6. Raclette (1) selon la revendication 5, **caractérisée en ce que** les axes (5) sont introduits dans la raclette (1) à l'encontre de la direction de transport (10), de telle sorte que la tête d'axe (17) est orientée vers l'avant parallèlement à la direction de chaine (10).

7. Raclette (1) selon l'une quelconque des revendications 5 ou 6, **caractérisée en ce que** la tête d'axe (17) est montée dans un évidement (24) du corps de raclette (2), de telle sorte qu'une face avant (19) de la raclette (1) est plate ou plane et/ou que la tête d'axe (17) est bloquée contre une rotation.

8. Raclette (1) selon l'une quelconque des revendications 1 à 7, **caractérisée en ce que** le corps de blocage (3) peut pivoter selon un angle (a) par rapport au corps de raclette (2), dans laquelle un angle d'ouverture (a) atteint de 90 à 140 degrés, en particulier de 100 à 135 degrés et de manière particulièrement préférée de 110 à 130 degrés.

9. Raclette (1) selon l'une quelconque des revendications 1 à 8, **caractérisée en ce que** le corps de raclette (2) présente un creux (6), dans lequel une extrémité (13) du corps de blocage (3) s'insère par coopération de formes, dans laquelle un axe (5) est disposé de manière à traverser les faces extérieures du creux (6) et l'extrémité (13) du corps de blocage (3), dans laquelle l'axe (5) forme un axe de pivotement.

10. Raclette (1) selon la revendication 9, **caractérisée en ce que** le mouvement pivotant du corps de blocage (3) est limité mécaniquement par le creux (6).

11. Raclette (1) selon l'une quelconque des revendications 1 à 10, **caractérisée en ce qu'**un maillon horizontal de la chaîne est logé dans le convoyeur à raclettes, dans laquelle un maillon vertical suivant respectivement le maillon horizontal vient en appui avec sa courbure extérieure sur une surface d'appui (8), dans laquelle la surface d'appui (8) est réalisée de préférence en deux parties, et une partie de la surface d'appui (8) est formée par le corps de raclette (2) et la seconde partie par le corps de blocage (3).

12. Raclette (1) selon l'une quelconque des revendications 1 à 11, **caractérisée en ce que** les axes (5) sont bloqués respectivement par au moins une goupille de serrage (21) et/ou par un circlip (22) et/ou par un vissage.

13. Raclette (1) selon l'une quelconque des revendications 1 à 12, **caractérisée en ce que** la raclette (1) présente des évidements traversant le corps de raclette (2) et le corps de blocage (3), de telle sorte que, dans l'état fermé, un axe (5) est inséré.
